# EUROPÄISCHE PATENTANMELDUNG

(11) **EP 3 851 317 A1**
(43) Veröffentlichungstag der Anmeldung: **21.07.2021**
(21) Anmeldenummer: 21152228.9
(22) Anmeldetag: 19.01.2021
(51) Int. Cl.: B60N 2/015, B21D 53/88, B21D 53/36, B21D 5/16, B21D 39/03, E04B 1/26, B60N 2/24, B21D 11/18

(54) **VERBINDUNGSBAUTEIL ZUR SITZBEFESTIGUNG IM FAHRZEUG**

(30) Priorität: 20.01.2020 DE 102020000338
(71) Anmelder: MAN Truck & Bus SE, 80995 München (DE)
(72) Erfinder: Urbanczyk, David, 80995 München (DE)
(74) Vertreter: v. Bezold & Partner Patentanwälte - PartG mbB

(57) **Zusammenfassung**

Die Erfindung betrifft u. a. ein Verfahren zur Herstellung eines Verbindungsbauteils (14) zur Befestigung eines Sitzes (10) in einem Fahrzeug. Das Verfahren weist ein Bereitstellen einer Vorform (14') des Verbindungsbauteils (14), die mehrere Stege (24, 26, 28) aufweist, die gabelförmig angeordnet sind, auf. Das Verfahren weist ein Biegen eines ersten Stegs (24) der mehreren Stege (24, 26, 28) zu einem Stufenprofil auf. Das Verfahren weist ein Biegen eines zweiten Stegs (26) der mehreren Stege (24, 26, 28) hin zu dem ersten Steg (24) auf, sodass ein freies Ende des zweiten Stegs (26) ein freies Ende des ersten Stegs (24) kontaktiert, wobei eine Positioniereinrichtung (40) des Verbindungsbauteils (14) das freie Ende des ersten Stegs (24) und das freie Ende des zweiten Stegs (26) beim Kontaktieren zueinander positioniert.

## Beschreibung

Die Erfindung betrifft ein Verfahren zur Herstellung eines Verbindungsbauteils zur Befestigung eines Sitzes in einem Fahrzeug. Die Erfindung betrifft auch ein Verbindungsbauteil zur Befestigung eines Sitzes in einem Fahrzeug und eine Vorform eines Verbindungsbauteils zur Befestigung eines Sitzes in einem Fahrzeug.

Die DE 197 56 252 A1 offenbart einen hinteren Bügel zur Sitzbefestigung. Der hintere Bügel weist einen oberen Befestigungsabschnitt und einen unteren Befestigungsabschnitt auf. Der obere Befestigungsabschnitt und der untere Befestigungsabschnitt sind zueinander parallel längs der Fahrzeuglängsrichtung angeordnet, einstückig ausgebildet und gehen über einen gebogenen Abschnitt ineinander über. Der hintere Bügel ist an dem gebogenen Abschnitt deformierbar. Der obere Befestigungsabschnitt ist am hinteren Ende einer unteren Schiene eines Sitzes durch einen Stift befestigt. Der untere Befestigungsabschnitt ist durch einen Bolzen am Fahrzeugboden befestigt.

Die EP 1 103 413 B1 offenbart ein Stützbeinteil zur Sitzbefestigung. Das Stützbeinteil ist durch Biegen eines starren Plattenmaterials in einer solchen versetzten Konfiguration gebildet, dass sich dessen oberer und unterer Befestigungsabschnitt parallel zueinander in entgegengesetzte Richtung in Bezug auf einen vertikal gebogenen Mittelabschnitt des Stützbeinteils erstrecken. Der obere Befestigungsabschnitt ist dazu ausgelegt, eine Führungsschiene sicher aufzunehmen. Andererseits ist der untere Befestigungsabschnitt zur sicheren Befestigung am Boden des Automobils ausgebildet. Das Stützbeinteil weist ein Paar Verstärkungsstücke an dessen Längsaußenseiten auf, um das Stützbeinteil zu verstärken und um als Führung für die Führungsschiene zu dienen. Die zwei Verstärkungsstücke werden gebildet, indem sowohl der rechte als auch der linke seitliche Bereich des Stützbeinelements nach oben gebogen werden.

Der Erfindung liegt die Aufgabe zu Grunde, eine alternative und/oder verbesserte Technik zur Sitzanbindung zu schaffen.

Die Aufgabe wird gelöst durch die Merkmale der unabhängigen Ansprüche. Vorteilhafte Weiterbildungen sind in den abhängigen Ansprüchen und der Beschreibung angegeben.

Ein Aspekt der vorliegenden Offenbarung betrifft ein Verfahren zur Herstellung eines (z. B einstückigen) Verbindungsbauteils zur (z. B. starren) Befestigung eines Sitzes in einem Fahrzeug (z. B. an einer Seitenwand des Fahrzeugs). Das Verfahren weist ein Bereitstellen einer (z. B. ebenen oder platten) Vorform des Verbindungsbauteils auf, wobei die Vorform mehrere Stege aufweist, die gabelförmig angeordnet sind. Das Verfahren weist ein (z. B. manuelles oder maschinelles) Biegen eines ersten Stegs der mehreren Steg zu einem Stufenprofil (z. B. Ein-Stufenprofil) auf. Das Verfahren weist ein (z. B. manuelles oder maschinelles) Biegen eines zweiten Stegs der mehreren Stege hin zu dem ersten Steg auf, sodass ein freies Ende (bzw. freier Endabschnitt) des zweiten Stegs ein freies Ende (bzw. freier Endabschnitt) des ersten Stegs kontaktiert. Eine, vorzugsweise lösbare, Positioniereinrichtung des Verbindungsbauteils positioniert das freie Ende des ersten Stegs und das freie Ende des zweiten Stegs beim Kontaktieren zueinander.

Vorzugsweise kann durch die Positioniereinrichtung eine exakte Positionierung der freien Enden des ersten und zweiten Stegs erfolgen. Die Positionierung kann dabei direkt beim Umbiegen, z. B. Abkanten, des zweiten Stegs erfolgen. Gemäß dem Poka-Yoke-Prinzip werden die freien Ende der Stege beim Umbiegen auf einfache Weise in der richtigen Position zueinander zwangspositioniert. Bei einem etwaig nachfolgenden Fügevorgang, z. B. Schweißvorgang oder Klebevorgang, zum Fügen der freien Enden des ersten und zweiten Stegs können aufwendige Vorkehrungen zum Positionieren und Verhindern eines Verziehens beim Fügen einfach weggelassen werden. Die Positionierhilfe ist sozusagen bereits im Verbindungsbauteil selbst integriert.

In einem Ausführungsbeispiel weist das Verfahren ferner ein Fügen, vorzugsweise Verschweißen oder Verkleben, des freien Endes des ersten Stegs und des freien Endes des zweiten Stegs, die zueinander mittels der Positioniereinrichtung positioniert sind, auf. Die Positioniereinrichtung kann beispielsweise auch einem Verziehen der Stege beim Fügen entgegenwirken und kann aufwendige Fügeverfahren und Fügevorrichtungen, die ein positionssicheres Fügen ermöglichen, überflüssig machen.

In einem weiteren Ausführungsbeispiel weist bereits die Vorform die Positioniereinrichtung auf, und/oder die Positioniereinrichtung wird bei einem Ausschneiden der Vorform gebildet, und/oder die Positioniereinrichtung ist integral-einstückig mit den mehreren Stegen ausgeführt. Damit kann die Positioniereinrichtung ein inhärentes bzw. integriertes Merkmal des Verbindungsbauteils sein, das beispielsweise beim Umbiegen nicht einfach vergessen werden kann (Poka-Yoke-Prinzip).

In einem weiteren Ausführungsbeispiel positioniert die Positioniereinrichtung das freie Ende des ersten Stegs und das freie Ende des zweiten Stegs bezüglich einer Hochachse, einer Querachse und/oder einer Längsachse des Verbindungsbauteils zueinander.

In einer Ausführungsform ist die Positioniereinrichtung dazu ausgebildet, das freie Ende des ersten Stegs im Wesentlichen auf halber Höhe des freien Endes des zweien Stegs zu positionieren. Alternativ oder zusätzlich kann die Positioniereinrichtung dazu ausgebildet sein, das freie Ende des ersten Stegs im Wesentlichen (z. B. endseitig) bündig abschließend mit dem freien Ende des zweiten Stegs zu positionieren.

In einer weiteren Ausführungsform ist die Positioniereinrichtung als eine Steckverbindung zwischen dem freien Ende des ersten Stegs und dem freien Ende des zweiten Stegs ausgeführt.

In einer Weiterbildung weist das freie Ende des ersten Stegs ein Steckelement (z. B. Stift, Zapfen oder Pin) der Steckverbindung auf, und/oder das freie Ende des zweiten Stegs weist eine Steckelementaufnahme (z. B. Loch, Durchgangsloch, Ausschnitt, Aussparung usw.) der Steckverbindung auf. Bevorzugt können das Steckelement und die Steckelementaufnahme einfach ineinandergesteckt werden, um die freien Enden des ersten Stegs und des zweiten Stegs beim Umbiegen auf einfache Weise zueinander zu positionieren.

In einer weiteren Ausführungsform ist das Steckelement als ein plattenförmiger, vorzugsweise rechteckiger oder trapezförmiger, Vorsprung ausgeführt. Dies kann eine Integration in die Vorform erleichtern.

In einer Ausführungsvariante ist das Steckelement an einer Außenseite des freien Endes des ersten Stegs angeordnet, z. B. auf halber Länge eines ersten Befestigungsabschnitts und/oder des freien Endes des ersten Stegs.

In einer weiteren Ausführungsvariante wird das Steckelement bei einem Ausschneiden der Vorform gebildet. Somit ist kein zusätzlicher Verfahrensschritt zum Vorsehen des Steckelements notwendig.

In einem Ausführungsbeispiel ist die Steckelementaufnahme als, vorzugsweise rechteckiges, Loch (z. B. Durchgangsloch) im freien Ende des zweiten Stegs ausgeführt. Dies kann eine Integration in die Vorform erleichtern.

In einem weiteren Ausführungsbeispiel ist die Steckelementaufnahme im Wesentlichen zentral im freien Ende des zweiten Stegs angeordnet. Es ist auch möglich, dass die Steckelementaufnahme dezentral und/oder außermittig im freien Ende des zweiten Stegs angeordnet ist.

In einem weiteren Ausführungsbeispiel wird die Steckelementaufnahme bei einem Ausschneiden der Vorform gebildet. Somit ist kein zusätzlicher Verfahrensschritt zum Vorsehen des Steckelements notwendig.

In einer Ausführungsform wird der zweite Steg hin zu dem ersten Steg entlang einer Biegekante zwischen dem ersten Steg und dem zweiten Steg gebogen, wobei die Biegekante parallel zu einer Längsachse des ersten Stegs verläuft. Alternativ oder zusätzlich kann der zweite Steg hin zu dem ersten Steg zum Einnehmen einer im Wesentlichen rechtwinkligen Ausrichtung zum ersten Steg gebogen werden.

In einer weiteren Ausführungsform weist das Bereitstellen der Vorform des Verbindungsbauteils ein (z. B. manuelles oder maschinelles) Schneiden, vorzugsweise Laserschneiden, der Vorform des Verbindungsbauteils aus einer Platte, vorzugsweise Blechplatte, auf.

In einer Ausführungsvariante ist der erste Steg der Vorform derart zu dem Stufenprofil gebogen, dass der erste Steg aufweist:
- einen ersten, vorzugsweise oberen, Befestigungsabschnitt an dem freien Ende des ersten Stegs zur Befestigung an dem Sitz,
- einen zweiten, vorzugsweise unteren, Befestigungsabschnitt zur Befestigung an dem Fahrzeug, und
- einen Verbindungsabschnitt, der den ersten Befestigungsabschnitt mit dem zweiten Befestigungsabschnitt (z. B. direkt) verbindet.

In einer weiteren Ausführungsvariante weist das Verfahren ferner ein Biegen eines dritten Stegs der mehreren Stege hin zu dem ersten Steg auf, sodass ein freies Ende des dritten Stegs das freie Ende des ersten Stegs kontaktiert (z. B. auf einer Seite entgegengesetzt zu dem zweiten Steg), wobei eine, vorzugsweise lösbare, weitere Positioniereinrichtung des Verbindungsbauteils das freie Ende des ersten Stegs und das freie Ende des dritten Stegs beim Kontaktieren zueinander positioniert. Optional kann das Verfahren ferner ein Fügen, vorzugsweise Verschweißen oder Verkleben, des freien Endes des ersten Stegs und des freien Endes des dritten Stegs, die zueinander mittels der weiteren Positioniereinrichtung positioniert sind, aufweisen.

Vorzugsweise kann die weitere Positioniereinrichtung wie die Positioniereinrichtung ausgebildet sein.

In einem Ausführungsbeispiel ist die weitere Positioniereinrichtung spiegelsymmetrisch zu der Positioniereinrichtung ausgeführt (z. B. bezüglich einer Vertikalmittellängsebene durch den ersten Steg).

In einem weiteren Ausführungsbeispiel weist bereits die Vorform die weitere Positioniereinrichtung auf, und/oder die weitere Positioniereinrichtung wird bei einem Ausschneiden der Vorform gebildet, und/oder die weitere Positioniereinrichtung ist integral-einstückig mit den mehreren Stegen ausgeführt, und/oder die weitere Positioniereinrichtung ist als eine Steckverbindung zwischen dem freien Ende des ersten Stegs und dem freien Ende des dritten Stegs ausgeführt, und/oder der erste Steg ist z. B. mittig zwischen dem zweiten Steg und dem dritten Steg angeordnet.

Vorzugweise kann das freie Ende des ersten Stegs ein Steckelement (z. B. Stift, Zapfen oder Pin) der Steckverbindung der weiteren Positioniereinrichtung aufweisen, und/oder das freie Ende des dritten Stegs eine Steckelementaufnahme (z. B. Loch, Durchgangsloch, Ausschnitt, Aussparung usw.) der Steckverbindung der weiteren Positioniereinrichtung aufweisen. Bevorzugt können das Steckelement und die Steckelementaufnahme einfach ineinandergesteckt werden, um die freien Enden des ersten Stegs und des dritten Stegs beim Umbiegen auf einfache Weise zueinander zu positionieren. Beispielsweise kann das Steckelement der weiteren Positioniereinrichtung als ein plattenförmiger, vorzugsweise rechteckiger oder trapezförmiger, Vorsprung ausgeführt sein. Beispielsweise kann das Steckelement der weiteren Positioniereinrichtung an einer Außenseite des freien Endes des ersten Stegs angeordnet sein, z. B. auf halber Länge eines ersten Befestigungsabschnitts und/oder des freien Endes des ersten Stegs. Es ist möglich, dass das Steckelement der weiteren Positioniereinrichtung bei einem Ausschneiden der Vorform gebildet wird. Es ist auch möglich, dass die Steckelementaufnahme der weiteren Positioniereinrichtung als, vorzugsweise rechteckiges, Loch (z. B. Durchgangsloch) im freien Ende des dritten Stegs ausgeführt ist. Vorzugsweise kann die Steckelementaufnahme der weiteren Positioniereinrichtung im Wesentlichen zentral im freien Ende des zweiten Stegs angeordnet sein. Bevorzugt kann die Steckelementaufnahme der weiteren Positioniereinrichtung bei einem Ausschneiden der Vorform gebildet werden.

Bevorzugt kann der dritte Steg hin zu dem ersten Steg entlang einer Biegekante zwischen dem ersten Steg und dem dritten Steg gebogen werden, wobei die Biegekante parallel zu einer Längsachse des ersten Stegs verläuft. Alternativ oder zusätzlich kann der dritte Steg hin zu dem ersten Steg zum Einnehmen einer im Wesentlichen rechtwinkligen Ausrichtung zum ersten Steg gebogen werden.

Beispielsweise kann die weitere Positioniereinrichtung das freie Ende des ersten Stegs und das freie Ende des dritten Stegs bezüglich einer Hochachse, einer Querachse und/oder einer Längsachse des Verbindungsbauteils zueinander positionieren.

Vorzugsweise kann die weitere Positioniereinrichtung dazu ausgebildet sein, das freie Ende des ersten Stegs im Wesentlichen auf halber Höhe des freien Endes des dritten Stegs zu positionieren. Alternativ oder zusätzlich kann die weitere Positioniereinrichtung beispielsweise dazu ausgebildet sein, das freie Ende des ersten Stegs im Wesentlichen (z. B. endseitig) bündig abschließend mit dem freien Ende des dritten Stegs zu positionieren.

Ein weiterer Aspekt betrifft ein (z. B. einstückiges) Verbindungsbauteil zur Befestigung eines Sitzes in einem Fahrzeug, vorzugsweise hergestellt wie hierin offenbart. Das Verbindungsbauteil weist einen ersten Steg mit einem Stufenprofil und mindestens einen weiteren Steg, der seitlich außen an dem ersten Steg angeordnet ist, auf. Der mindestens eine weitere Steg geht an einem ersten Ende gebogen in den ersten Steg über. Der mindestens eine weitere Steg ist an einem dem ersten Ende entgegengesetzten zweiten Ende (z. B. freien Ende) mit dem ersten Steg gefügt, vorzugsweise verschweißt oder verklebt. Das Verbindungsbauteil weist mindestens eine, vorzugsweise lösbare, Positioniereinrichtung (z. B. Steckverbindung) auf, die das zweite Ende und den ersten Steg (z. B ein freies Ende des ersten Stegs) zueinander positioniert.

Vorzugsweise kann die mindestens eine Positioniereinrichtung separat zu einer Fügestelle vorgesehen sein.

Ein weiterer Aspekt betrifft ein Fahrzeug, vorzugsweise ein Nutzfahrzeug (z. B. Omnibus). Das Fahrzeug weist eine Karosserie mit einer Seitenwand, einen Sitz und ein Verbindungsbauteil wie hierin offenbart auf, wobei das Verbindungsbauteil den Sitz (z. B. unbewegbar oder starr) an der Karosserie, vorzugsweise der Seitenwand, befestigt.

Ein weiterer Aspekt betrifft eine (z. B. platte oder ebene) Vorform eines Verbindungsbauteils zur Befestigung eines Sitzes in einem Fahrzeug, vorzugsweise hergestellt wie hierin offenbart. Die Vorform weist mehrere Stege, die gabelförmig angeordnet sind, und mindestens eine Positioniereinrichtung, die dazu ausgebildet ist, ein freies Ende eines ersten Stegs der mehreren Stege und ein freies Ende mindestens eines weiteren Stegs der mehreren Stege zueinander zu positionieren, wenn der mindestens eine weitere Steg hin zu dem ersten Steg gebogen wird, auf.

Vorzugsweise kann die Vorform aus einer Platte, bevorzugt Blechplatte, ausgeschnitten sein.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Ansicht eines Innenraums in der Schnittebene Quer- zu Hochachse des Fahrzeugs;
- Figur 2: eine Vorform eines beispielhaften Verbindungsbauteils zur Befestigung eines Sitzes in einem Fahrzeug; und
- Figur 3: eine perspektivische Ansicht des beispielhaften Verbindungsbauteils im Zusammenbau.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

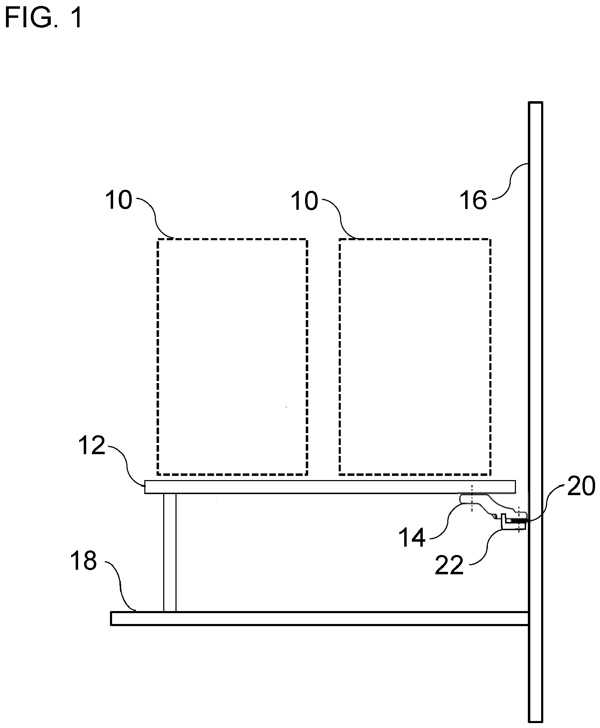

Figur 1 zeigt einen Schnitt eines Innenraums eines Fahrzeugs zur Personenbeförderung. Das Fahrzeug ist vorzugsweise als Kraftfahrzeug, besonders bevorzugt als Nutzfahrzeug, ausgeführt. Beispielsweise ist das Fahrzeug ein Omnibus. Es ist allerdings beispielsweise auch möglich, dass das Fahrzeug als ein Wasserfahrzeug (z. B. Fähre) oder ein Schienenfahrzeug (z. B. Zug) ausgeführt ist. Es ist auch möglich, dass das Fahrzeug ein Personenkraftwagen ist.

Das Fahrzeug weist einen oder mehrere Sitze 10 auf. Die Sitze können beispielsweise in Sitzreihen angeordnet sein. Jeweils ein oder mehrere Sitze 10 sind mittels eines Traggestells 12 getragen. Das Traggestell 12 ist mittels eines Verbindungsbauteils 14 an einer Seitenwand 16 des Fahrzeugs abgestützt. Das Verbindungsbauteil 14 kann beispielsweise von unten an dem Traggestell 12 befestigt sein, z. B. mittels einer Verschraubung. Das Traggestell 12 kann auch auf einem Boden 18 des Fahrzeugs abgestützt sein.

Das Verbindungsbauteil 14 kann den oder die Sitze 10, die am Traggestell 12 abgestützt sind, an der Seitenwand 16 befestigen. Eine Befestigung an einem anderen Teil der Karosserie ist ebenfalls möglich, z. B. am Boden der Karosserie. Die Seitenwand 16 weist eine Befestigungsschiene 20 auf. Die Befestigungsschiene 20 kann sich beispielsweise parallel zu einer Längsachse des Fahrzeugs erstrecken. Die Befestigungsschiene 20 kann horizontal ausgerichtet sein. An der Befestigungsschiene 20 können mehrere Traggestelle 12 für mehrere Sitze 10 befestigt werden, z. B. in mehreren Sitzreihen hintereinander.

Das Verbindungsbauteil 14 kann beispielsweise mittels eines Klemmelements 22 an die Befestigungsschiene 20 geklemmt sein. Zum Aufbringen einer Klemmkraft kann beispielsweise eine Befestigungsschraube dienen, wie durch die strichpunktierte Linie in Figur 1 angedeutet ist. Die Befestigungsschraube verbindet das Verbindungsbauteil 14 und das Klemmelement 22 und optional auch die Befestigungsschiene 20.

Alternativ oder zusätzlich ist es auch möglich, dass das Verbindungsbauteil 14 einen oder mehrere Sitze 10 und/oder das Traggestell 12 am Boden 18 des Fahrzeugs befestigt.

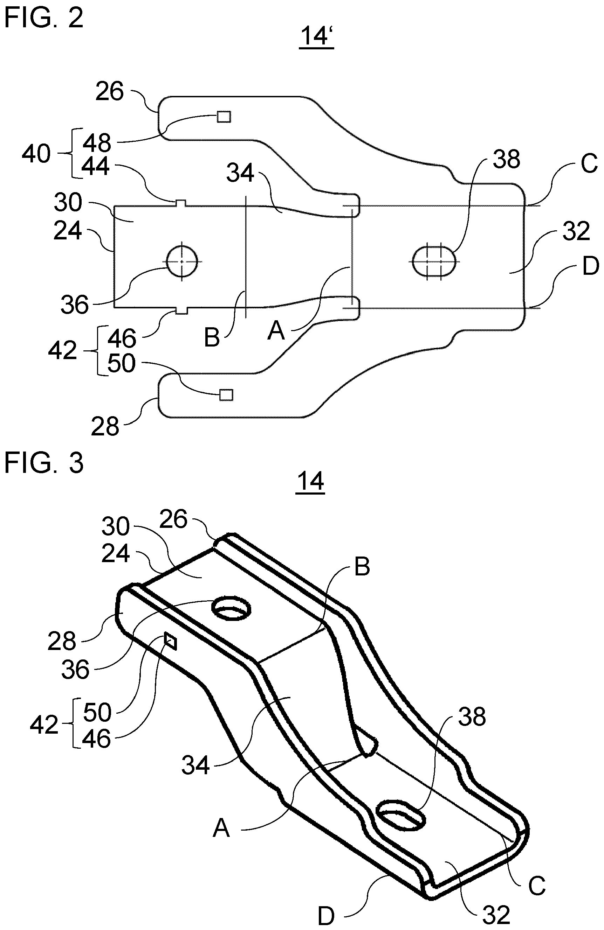

Nachfolgend ist das Verbindungsbauteil 14 unter Bezugnahme auf die Figuren 2 und 3 näher beschrieben. Figur 2 zeigt eine Vorform des Verbindungsbauteils 14. Figur 3 zeigt das Verbindungsbauteil im Zusammenbau.

Die Vorform 14' kann beispielsweise aus einem Blech bzw. einer Blechplatte ausgeschnitten sein, z. B. mittels Laserschneiden, Wasserstrahlschneiden, Plasmaschneiden, Autogenschneiden, Stanzen oder einem anderen geeigneten Trennverfahren. Das Blech kann beispielsweise eine Materialstärke von ungefähr 3 mm aufweisen, je nach Anforderung. Die Vorform 14' kann auf andere Art und Weise bereitgestellt werden.

Die Vorform 14' ist platt bzw. eben. Die Vorform 14' weist mehrere Stege 24, 26, 28 auf. Die Stege 24, 26, 28 sind bevorzugt integral-einstückig miteinander verbunden. Die Stege 24, 26, 28 sind gabelförmig angeordnet. Der erste Steg 24 ist zwischen dem zweiten Steg 26 und dem dritten Steg 28 angeordnet. Die Stege 24, 26, 28 haben ein gemeinsames Ende, an dem sie alle miteinander verbunden sind, vorzugsweise integral-einstückig. Die Stege 24, 26, 28 weisen jeweils ein freies Ende auf, das beabstandet zu den freien Enden der anderen Stege 24, 26 bzw. 28 angeordnet ist. Es ist möglich, dass eine andere Anzahl von Stegen vorgesehen ist, z. B. nur zwei Stege 24, 26.

Der erste Steg 24 erstreckt sich im Wesentlichen geradlinig. Der zweite und dritte Steg 26, 28 erstrecken sich jeweils in entgegengesetzte Richtungen weg von dem freien Ende des ersten Stegs 24.

Der erste Steg 24 weist einen ersten Befestigungsabschnitt 30 und einen zweiten Befestigungsabschnitt 32 auf. Ein Verbindungsabschnitt 34 kann zwischen den Befestigungsabschnitten 30, 32 angeordnet sein. In der Vorform 14' ist der Verbindungsabschnitt 34 zweckmäßig eben.

Der erste Befestigungsabschnitt 30 ist am freien Ende des ersten Stegs 24 angeordnet. Der erste Befestigungsabschnitt 30 kann vorzugsweise zur Befestigung an dem Traggestell 12 (siehe Figur 1) dienen. Beispielsweise kann der erste Befestigungsabschnitt 30 ein Loch 36 (z. B. Durchgangsloch, Schraubenloch usw.) für eine Schraubverbindung mit dem Traggestell 12 aufweisen. Das Loch 36 kann vorzugsweise zentral im ersten Befestigungsabschnitt 32 angeordnet sein.

Der zweite Befestigungsabschnitt 32 ist an einem dem freien Ende entgegengesetzten Ende des ersten Stegs 24 angeordnet. Der zweite Befestigungsabschnitt 32 kann vorzugsweise zur Befestigung an der Befestigungsschiene 20 (siehe Figur 1) dienen. Beispielsweise kann der zweite Befestigungsabschnitt 32 ein Langloch 38 (z. B. Durchgangsloch, Schraubenloch usw.) für eine Schraub-Klemm-Verbindung mit dem Klemmelement 22 und der Befestigungsschiene 20 aufweisen. Das Langloch 38 kann hierbei einen Toleranzausgleich bei der Montage ermöglichen. Das Langloch 38 kann vorzugsweise zentral im zweiten Befestigungsabschnitt 32 angeordnet sein.

In Figur 2 sind bereits Biegekanten A, B, C, D eingezeichnet, entlang denen die Stege 24, 26, 28 gebogen werden, um aus der Vorform 14' zu einer Endform des Verbindungsbauteils 14 zu gelangen.

Der erste Steg 24 kann entlang der Biegekanten A und B zu einer Stufenform bzw. einem Stufenprofil gebogen werden (siehe Figur 3). Die Biegekanten A und B können parallel zueinander sein. Die Biegekanten A und B sind entlang einer Längsachse des ersten Stegs 24 versetzt zueinander angeordnet. Nach dem Biegen ist der erste Befestigungsabschnitt 30 höher als der zweite Befestigungsabschnitt 32 angeordnet. Der Verbindungsabschnitt 34 ist gebogen. Beispielsweise ist der erste Steg 24 an den Biegekanten A und B jeweils im gleichen Winkel, aber in entgegengesetzte Richtungen gebogen. Der Verbindungsabschnitt 34 kann um den Winkel entlang der Biegekante A relativ zu dem zweiten Befestigungsabschnitt 32 nach oben gebogen sein. Der erste Befestigungsabschnitt 30 kann um den Winkel entlang der Biegekante B relativ zu dem Verbindungsabschnitt 34 nach unten gebogen sein. Der Winkel kann beispielsweise im Bereich von 60° ± 30° liegen, vorzugsweise bei rund 60°. Nach dem Biegen des ersten Stegs 24 an den Biegekanten A und B sind die Befestigungsabschnitte 30 und 32 höhenversetzt und vorzugsweise parallel zueinander.

Der zweite Steg 26 kann entlang der Biegekante C hin zu dem ersten Steg 24 gebogen werden, vorzugweise in einem Winkel von rund 90°. Die Biegekante C ist parallel zu einer Längsachse des ersten Stegs 24. Nach dem Biegen kontaktiert das freie Ende des zweiten Stegs 26 das freie Ende des ersten Stegs 24 seitlich außen.

Der dritte Steg 28 kann entlang der Biegekante D hin zu dem ersten Steg 24 gebogen werden, vorzugweise in einem Winkel von rund 90°. Die Biegekante D ist parallel zu einer Längsachse des ersten Stegs 24. Die Biegekanten C und D können parallel zueinander sein. Nach dem Biegen kontaktiert das freie Ende des dritten Stegs 28 das freie Ende des ersten Stegs 24 seitlich außen auf einer entgegengesetzten Seite zum zweiten Steg 26.

Um nach bzw. beim Biegen eine exakte Positionierung und Ausrichtung der freien Enden der Stege 24, 26, 28 zueinander zu erhalten, weist das Verbindungsbauteil 14 eine erste Positioniereinrichtung 40 und eine zweite Positioniereinrichtung 42, die bevorzugt lösbar ausgeführt sind, auf.

Wie dargestellt ist, können die Positioniereinrichtungen 40, 42 beispielsweise als Steckverbindungen ausgeführt sein. Andere, vorzugsweise lösbare, Ausführungen sind auch möglich.

Im dargestellten Ausführungsbeispiel weisen die Positioniereinrichtungen 40, 42 jeweils ein Steckelement 44, 46 und eine Steckelementaufnahme 48, 50 auf.

Die Steckelemente 44, 46 sind vorzugsweise plattenförmige Vorsprünge, z. B. in Rechteckform oder in Trapezform. Die Steckelemente 44, 46 sind außen am freien Ende des ersten Stegs 24 angeordnet. Die Steckelemente 44, 46 können auf entgegengesetzten Seiten des freien Endes des ersten Stegs 24 angeordnet sein. Das Steckelement 44 ist dem zweiten Steg 26 zugewandt. Das Steckelement 46 ist dem dritten Steg 28 zugewandt. Vorzugsweise können die Steckelemente 44, 46 an gleicher Längenposition des ersten Stegs 24 wie das Loch 36 angeordnet sein. Vorzugsweise können die Steckelemente 44, 46 am freien Ende des ersten Stegs 24 zurückversetzt angeordnet sein, z. B. mittig bezüglich einer Länge des ersten Befestigungsabschnitts 30.

Die Steckelementaufnahme 48 ist zur Aufnahme des Steckelements 44 ausgebildet. Die Steckelementaufnahme 50 ist zur Aufnahme des Steckelements 46 ausgebildet. Die Steckelementaufnahme 48 ist im freien Ende des zweiten Stegs 26 angeordnet, vorzugsweise zurückversetzt und/oder zentral. Die Steckelementaufnahme 50 ist in dem freien Ende des dritten Stegs 28 angeordnet, vorzugsweise zurückversetzt und/oder zentral. Die Steckelementaufnahmen 48, 50 können bevorzugt als Löcher, vorzugsweise Durchgangslöcher, ausgeführt sein. Eine Form der Steckelementaufnahmen 48, 50 kann an eine Form der Steckelemente 44, 46 angepasst sein. Beispielsweise können die Steckelementaufnahme 48, 50 eine Rechteckform aufweisen.

Die Positioniereinrichtungen 40, 42 können spiegelsymmetrisch bezüglich einer vertikalen Mittellängsebene durch den ersten Steg 24 ausgeführt sein.

Die Positioniereinrichtungen 40, 42 können bereits an der Vorform 14' gebildet sein. Die Steckelemente 44, 46 können beispielsweise direkt zusammen mit dem ersten Steg 24 als entsprechende Vorsprünge aus einer Blechplatte ausgeschnitten werden. Die Steckelementaufnahme 48, 50 können beim Ausschneiden der Vorform 14' beispielsweise direkt aus den freien Enden der Stege 26, 28 mitausgeschnitten werden.

Beim Biegen der Stege 26, 28 nach innen entlang der Biegekanten C und D können die Steckelemente 44, 46 in die Steckelementaufnahmen 48, 50 eingeführt werden, wenn die Stege 24 und 26 bzw. 26 und 28 einander kontaktieren. Die freien Enden der Stege 24, 26, 28 können so auf eine gewünschte Weise zueinander positioniert und ausgerichtet werden. Die Positioniereinrichtungen 40, 42 können die freien Enden der Stege 24, 26, 28 bezüglich einer Hochachse, einer Querachse und/oder einer Längsachse des Verbindungsbauteils 14 zueinander positionieren. Bevorzugt positionieren die Positioniereinrichtungen 40, 42 das freie Ende des ersten Stegs 24 im Wesentlichen auf halber Höhe der freien Enden des zweiten und dritten Stegs 26, 28 und endseitig bündig abschließend miteinander.

Durch die Positionierung mittels der Positioniereinrichtungen 40, 42 kann auch ein optional nachfolgender Fügevorgang, bei dem die freien Enden der Stege 24, 26, 28 miteinander gefügt werden, durchgeführt werden, ohne dass aufwendige Vorkehrungen getroffen werden müssen, um beim Fügen die genaue Positionierung der freien Enden der Stege 24, 26, 28 sicherzustellen. Beim Fügen können beispielsweise die freien Enden der Stege 24, 26, 28 miteinander verschweißt oder verklebt werden, zum Beispiel an einer Unterseite und/oder einer Oberseite ersten Stegs 24. Die Positioniereinrichtungen 40, 42 verhindern somit beispielsweise auch die Notwendigkeit einer aufwendigen Schweißkonstruktion zum Sicherstellen der richtigen Positionierung der freien Enden der Stege 24, 26, 28.

Wie erwähnt, ist es auch möglich, dass das Verbindungsbauteil 14 beispielsweise nur zwei Stege 24, 26 aufweist. Dementsprechend kann das Verbindungsbauteil 14 beispielsweise auch nur eine Positioniereinrichtung 40 aufweisen.

Es ist möglich, dass das Verbindungsbauteil 14 mehrere Positioniereinrichtungen zum Positionieren zwischen den Stegen 24 und 26 und/oder zwischen den Stegen 24 und 28 aufweist. Es ist auch möglich, dass die erste Positioniereinrichtung 40 und/oder die zweite Positioniereinrichtung 42 jeweils mehrere Steckelemente und/oder jeweils mehrere Steckelementaufnahmen aufweist.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 offenbart. Alle Bereichsangaben hierin sind derart offenbart zu verstehen, dass gleichsam alle in den jeweiligen Bereich fallenden Werte einzeln offenbart sind, z. B. auch als jeweils bevorzugte engere Außengrenzen des jeweiligen Bereichs.

### Bezugszeichenliste

- 10: Sitz
- 12: Traggestell
- 14': Vorform des Verbindungsbauteils
- 14: Verbindungsbauteil (Endform)
- 16: Seitenwand
- 18: Boden
- 20: Befestigungsschiene
- 22: Klemmelement
- 24: Erster Steg (z. B. Mittelsteg)
- 26: Zweiter Steg (z. B. Außensteg)
- 28: Dritter Steg (z. B. Außensteg)
- 30: Erster Befestigungsabschnitt
- 32: Zweiter Befestigungsabschnitt
- 34: Verbindungsabschnitt
- 36: Loch
- 38: Langloch
- 40: Erste Positioniereinrichtung
- 42: Zweite Positioniereinrichtung
- 44: Steckelement
- 46: Steckelement
- 48: Steckelementaufnahme
- 50: Steckelementaufnahme
- A-D: Biegekanten

## Patentansprüche

1. Verfahren zur Herstellung eines Verbindungsbauteils (14) zur Befestigung eines Sitzes (10) in einem Fahrzeug, aufweisend:
Bereitstellen einer Vorform (14') des Verbindungsbauteils (14), die mehrere Stege (24, 26, 28) aufweist, die gabelförmig angeordnet sind;
Biegen eines ersten Stegs (24) der mehreren Stege (24, 26, 28) zu einem Stufenprofil; und
Biegen eines zweiten Stegs (26) der mehreren Stege (24, 26, 28) hin zu dem ersten Steg (24), sodass ein freies Ende des zweiten Stegs (26) ein freies Ende des ersten Stegs (24) kontaktiert, wobei eine, vorzugsweise lösbare, Positioniereinrichtung (40) des Verbindungsbauteils (14) das freie Ende des ersten Stegs (24) und das freie Ende des zweiten Stegs (26) beim Kontaktieren zueinander positioniert.

2. Verfahren nach Anspruch 1, ferner aufweisend:
Fügen, vorzugsweise Verschweißen oder Verkleben, des freien Endes des ersten Stegs (24) und des freien Endes des zweiten Stegs (26), die zueinander mittels der Positioniereinrichtung (40) positioniert sind.

3. Verfahren nach Anspruch 1 oder Anspruch 2, wobei:
bereits die Vorform (14') die Positioniereinrichtung (40) aufweist; und/oder
die Positioniereinrichtung (40) bei einem Ausschneiden der Vorform (14') gebildet wird; und/oder
die Positioniereinrichtung (40) integral-einstückig mit den mehreren Stegen (24, 26, 28) ausgeführt ist.

4. Verfahren nach einem der vorherigen Ansprüche, wobei:
die Positioniereinrichtung (40) das freie Ende des ersten Stegs (24) und das freie Ende des zweiten Stegs (26) bezüglich einer Hochachse, einer Querachse und/oder einer Längsachse des Verbindungsbauteils (14) zueinander positioniert; und/oder
die Positioniereinrichtung (40) dazu ausgebildet ist, das freie Ende des ersten Stegs (24) im Wesentlichen auf halber Höhe des freien Endes des zweien Stegs (26) zu positionieren; und/oder
die Positioniereinrichtung (40) dazu ausgebildet ist, das freie Ende des ersten Stegs im Wesentlichen bündig abschließend mit dem freien Ende des zweiten Stegs (26) zu positionieren.

5. Verfahren nach einem der vorherigen Ansprüche, wobei:
die Positioniereinrichtung (40) als eine Steckverbindung zwischen dem freien Ende des ersten Stegs (24) und dem freien Ende des zweiten Stegs (26) ausgeführt ist.

6. Verfahren nach Anspruch 5, wobei:
das freie Ende des ersten Stegs (24) ein Steckelement (44) der Steckverbindung aufweist; und/oder
das freie Ende des zweiten Stegs (26) eine Steckelementaufnahme (48) der Steckverbindung aufweist.

7. Verfahren nach Anspruch 6, wobei:
das Steckelement (44) als ein plattenförmiger, vorzugsweise rechteckiger oder trapezförmiger, Vorsprung ausgeführt ist; und/oder
das Steckelement (44) an einer Außenseite des freien Endes des ersten Stegs (24) angeordnet ist; und/oder
das Steckelement (44) bei einem Ausschneiden der Vorform (14') gebildet wird; und/oder
die Steckelementaufnahme (48) als, vorzugsweise rechteckiges, Loch im freien Ende des zweiten Stegs (26) ausgeführt ist; und/oder
die Steckelementaufnahme (48) im Wesentlichen zentral im freien Ende des zweiten Stegs (26) angeordnet ist; und/oder
die Steckelementaufnahme (48) bei einem Ausschneiden der Vorform (14') gebildet wird.

8. Verfahren nach einem der vorherigen Ansprüche, wobei:
der zweite Steg (26) hin zu dem ersten Steg (24) entlang einer Biegekante (C) zwischen dem ersten Steg (24) und dem zweiten Steg (26) gebogen wird, wobei die Biegekante (C) parallel zu einer Längsachse des ersten Stegs (24) verläuft; und/oder
der zweite Steg (26) hin zu dem ersten Steg (24) zum Einnehmen einer im Wesentlichen rechtwinkligen Ausrichtung zum ersten Steg (24) gebogen wird.

9. Verfahren nach einem der vorherigen Ansprüche, wobei das Bereitstellen der Vorform (14') des Verbindungsbauteils (14) aufweist:
Schneiden, vorzugsweise Laserschneiden, der Vorform (14') des Verbindungsbauteils (14) aus einer Platte, vorzugsweise Blechplatte.

10. Verfahren nach einem der vorherigen Ansprüche, wobei:
der erste Steg (24) der Vorform (14') derart zu dem Stufenprofil gebogen ist, dass der erste Steg (24) aufweist:
- einen ersten, vorzugsweise oberen, Befestigungsabschnitt (30) an dem freien Ende des ersten Stegs (24) zur Befestigung an dem Sitz (10),
- einen zweiten, vorzugsweise unteren, Befestigungsabschnitt (32) zur Befestigung an dem Fahrzeug, und
- einen Verbindungsabschnitt (34), der den ersten Befestigungsabschnitt (30) mit dem zweiten Befestigungsabschnitt (32) verbindet.

11. Verfahren nach einem der vorherigen Ansprüche, ferner aufweisend:
Biegen eines dritten Stegs (28) der mehreren Stege (24, 26, 28) hin zu dem ersten Steg (24), sodass ein freies Ende des dritten Stegs (28) das freie Ende des ersten Stegs (24) kontaktiert, wobei eine, vorzugsweise lösbare, weitere Positioniereinrichtung (42) des Verbindungsbauteils (14) das freie Ende des ersten Stegs (24) und das freie Ende des dritten Stegs (28) beim Kontaktieren zueinander positioniert; und optional:
Fügen, vorzugsweise Verschweißen oder Verkleben, des freien Endes des ersten Stegs (24) und des freien Endes des dritten Stegs (28), die zueinander mittels der weiteren Positioniereinrichtung (42) positioniert sind.

12. Verfahren nach Anspruch 11, wobei
die weitere Positioniereinrichtung (42) spiegelsymmetrisch zu der Positioniereinrichtung (40) ausgeführt ist; und/oder
bereits die Vorform (14') die weitere Positioniereinrichtung (42) aufweist; und/oder
die weitere Positioniereinrichtung (42) bei einem Ausschneiden der Vorform (14') gebildet wird; und/oder
die weitere Positioniereinrichtung (42) integral-einstückig mit den mehreren Stegen (24, 26, 28) ausgeführt ist; und/oder
die weitere Positioniereinrichtung (42) als eine Steckverbindung zwischen dem freien Ende des ersten Stegs (24) und dem freien Ende des dritten Stegs (28) ausgeführt ist; und/oder
der erste Steg (24) mittig zwischen dem zweiten Steg (26) und dem dritten Steg (28) angeordnet ist.

13. Verbindungsbauteil (14) zur Befestigung eines Sitzes (10) in einem Fahrzeug, vorzugsweise hergestellt nach einem der vorherigen Ansprüche, aufweisend:
einen ersten Steg (24) mit einem Stufenprofil;
mindestens einen weiteren Steg (26, 28), der seitlich außen an dem ersten Steg (24) angeordnet ist, wobei:
- der mindestens eine weitere Steg (26, 28) an einem ersten Ende gebogen in den ersten Steg (24) übergeht, und
- der mindestens eine weitere Steg (26, 28) an einem dem ersten Ende entgegengesetzten zweiten Ende mit dem ersten Steg (24) gefügt, vorzugsweise verschweißt oder verklebt, ist;
mindestens eine, vorzugsweise lösbare, Positioniereinrichtung (40, 42), die das zweite Ende und den ersten Steg (24) zueinander positioniert.

14. Fahrzeug, vorzugsweise Nutzfahrzeug, aufweisend:
eine Karosserie mit einer Seitenwand (16);
einen Sitz (10); und
ein Verbindungsbauteil (14) nach Anspruch 13, wobei das Verbindungsbauteil (14) den Sitz (10) an der Karosserie, vorzugsweise der Seitenwand (16), befestigt.

15. Vorform (14') eines Verbindungsbauteils (14) zur Befestigung eines Sitzes (10) in einem Fahrzeug, vorzugsweise hergestellt nach einem der vorherigen Ansprüche, aufweisend:
mehrere Stege (24, 26, 28), die gabelförmig angeordnet sind; und
mindestens eine Positioniereinrichtung (40, 42), die dazu ausgebildet ist, ein freies Ende eines ersten Stegs (24) der mehreren Stege (24, 26, 28) und ein freies Ende mindestens eines weiteren Stegs (26, 28) der mehreren Stege (24, 26, 28) zueinander zu positionieren, wenn der mindestens eine weitere Steg (26, 28) hin zu dem ersten Steg (24) gebogen wird.
